# EUROPEAN PATENT SPECIFICATION

(11) **EP 3 816 309 B1**
(45) Date of publication and mention of the grant of the patent: **02.04.2025**
(21) Application number: 19825075.5
(22) Date of filing: 21.06.2019
(51) Int. Cl.: C22B 23/00, C22B 3/08, C22B 3/10, C22B 7/00, C22B 3/00

(54) **METHOD FOR SEPARATING COPPER FROM NICKEL AND COBALT**
VERFAHREN ZUR ABSCHEIDUNG VON KUPFER AUS NICKEL UND KOBALT
PROCÉDÉ POUR SÉPARER LE CUIVRE DU NICKEL ET DU COLBALT

(30) Priority: 27.06.2018 JP 2018121733
(43) Date of publication of application: 05.05.2021
(73) Proprietor: SUMITOMO METAL MINING CO., LTD., Tokyo 105-8716 (JP)
(72) Inventor: HIGAKI Tatsuya, Niihama-shi, Ehime 792-0002 (JP); TAKENOUCHI Hiroshi, Niihama-shi, Ehime 792-0002 (JP); KOBAYASHI Hiroshi, Niihama-shi, Ehime 792-0002 (JP)
(74) Representative: Jones, Nicholas Andrew
(86) International application number: PCT/JP2019/024805
(87) International publication number: WO 2020/004285

(56) References cited:
- JP-A- 2003 082 421
- JP-A- 2005 089 808
- JP-A- 2007 191 769
- JP-A- 2010 100 938
- JP-A- 2010 100 938
- JP-A- 2017 036 489
- JP-A- 2017 036 489
- JP-A- 2017 155 280
- JP-A- 2017 155 281
- JP-A- 2018 040 035
- JP-A- 2018 040 035

## Description

### TECHNICAL FIELD

The present invention relates to a method for separating copper from nickel and cobalt from a sulfide containing copper, nickel and cobalt.

### BACKGROUND ART

Generally, nickel matte (a sulfide containing nickel and cobalt) used in a nickel smelting plant contains a small amount of copper, and not only nickel and cobalt but copper is also simultaneously leached during refining by leaching treatment (e.g., Patent Document 1). Therefore, a smelting method using nickel matte needs to have a copper removal process of removing leached copper. Therefore, when nickel matte is used in a large quantity to increase the production amount of nickel, it is required to increase loading on the copper removal process at the same time.

There is also a method in which copper contained in nickel matte, i.e., a raw material, is left as copper sulfide in a residue by leaching nickel and cobalt in the form of ion exchange in an autoclave, using a copper oxalate solution as a solvent. However, since this method necessitates the treatment of copper in the solvent as well, in addition to copper in the raw material, copper loading on the entire process increases and the process becomes complicated.

Similarly, when a low-grade nickel matte having a high copper grade is used, leaching copper also increases the loading on the copper removal process. As described above, increasing the loading on the copper removal process results in practical problems such as operation balance and a cost increase.

When taking into account these problems, there is a need for a simple method for separating copper by selectively leaching nickel and cobalt in order to suppress the loading on the copper removal process using nickel matte. Patent Document 2 discloses a method for separating copper from nickel and cobalt, wherein a sulfide comprising copper, nickel and cobalt is pulverized.

Patent Document 3 discloses a method including a leaching which is terminated before the redox potential reaches 0mV.
Patent Document 1: Japanese Unexamined Patent Application, Publication No. H2-197533
Patent Document 2: JP2010100938A
Patent Document 3: JP2017036489A

### DISCLOSURE OF THE INVENTION

### Problems to be Solved by the Invention

In view of such circumstances, the present invention is proposed and it is an object of the present invention to provide a method for efficiently separating copper from nickel and cobalt from a sulfide containing copper together with nickel and cobalt.

### Means for Solving the Problems

The present inventors have conducted extensive studies to solve the above-described problems. The above problems are solved as described in claims 1 to 5.

### Effects of the Invention

According to the present invention, it is possible to efficiently separate copper from nickel and cobalt from a sulfide containing copper together with nickel and cobalt.

### BRIEF DESCRIPTION OF THE DRAWINGS

FIG. 1 is a graph showing a relationship between a particle size of nickel matte (D90) and a leaching ratio;
FIG. 2 is a graph showing a relationship between a leaching treatment time and Nickel (Ni) leaching ratio by hydrochloric acid equivalent;
FIG. 3 is a graph showing a relationship between the leaching treatment time and Cobalt (Co) leaching ratio by hydrochloric acid equivalent;
FIG. 4 is a graph showing a relationship between the leaching treatment time and Cupper (Cu) leaching ratio by hydrochloric acid equivalent;
FIG. 5 is a graph showing a relationship between the hydrochloric acid equivalent and the leaching ratio of each component (Ni, Co, Cu) at the leaching treatment time of 3 hours;
FIG. 6 is a graph showing a relationship between a redox potential during the leaching treatment (ORP, a silver/silver chloride electrode was referenced) and a Cu concentration in the obtained leachates; and
FIG. 7 is a graph showing a relationship between the ORP and the copper leaching ratio.

### PREFERRED MODE FOR CARRYING OUT THE INVENTION

Below, specific embodiments of the present invention (hereinafter, referred to as a "present embodiment") are described in detail, but the present invention is not limited to the following embodiments, and can be implemented with appropriate modifications within a scope in which the gist of the present invention is not changed. Note that, in this specification, the notation "X to Y" (X and Y are arbitrary numerical values) means "X or more and Y or less".

The separation method according to the present embodiment is a method of separating copper from nickel and cobalt from a sulfide containing copper, nickel and cobalt (hereinafter, simply referred to as "sulfide"). Examples of the sulfide containing copper together with nickel and cobalt include nickel matte.

Specifically, this separation method is characterized in that the leaching treatment is conducted by pulverizing a sulfide containing copper, nickel and cobalt to a predetermined size, and stirring the pulverized sulfide using an acid solution under a condition in which a redox potential (ORP) (silver/silver chloride electrode is referenced) is less than 100 mV. By this leaching treatment, a leachate in which nickel and cobalt are leached and a solid residue in which copper is in a form of copper sulfide are produced, and copper is separated from nickel and cobalt.

According to such a method, nickel and cobalt can be selectively leached from a sulfide of a raw material, such as nickel matte, and separated from copper in the raw material, so that loading on a copper removal process can be effectively suppressed.

In the leaching treatment, prior to addition of acid solution, the sulfide containing copper, nickel and cobalt is pulverized so as to have a particle size of a predetermined size.

The particle size of the sulfide to be subjected to the leaching treatment is 150 µm or less, preferably 100 µm or less, and more preferably 40 µm or less, as a particle size (D90) value at 90% in terms of volume determined from the particle size distribution. Particle size of a sulfide (D90 value), for example, can be measured by a particle size distribution measuring apparatus or the like using a laser diffraction scattering method. Note that the lower limit value of the particle size of a sulfide is not particularly limited as long as the particle size value is a value exceeding 0 µm, and may be, for example, 5 µm or more from the viewpoint of handling and the like, and is more preferably 10 µm or more.

A method of pulverizing a sulfide is not particularly limited, and may be performed by various known methods such as dry pulverization by a jet mill, a braun mill, a ball mill, or the like, or wet pulverization by a ball mill, a bead mill, a wet jet mill, or the like.

A sulfide is pulverized and then the sulfide is subjected to a leaching treatment using an acid solution. At this time, the present embodiment is characterized in that an acid solution containing a sulfide is stirred in a condition in which the oxidation-reduction potential (ORP) of the acid solution is less than 100 mV as measured using a silver/silver chloride electrode as a reference electrode. In this way, by conducting the leaching treatment under the condition in which the oxidation-reduction potential of the acid solution is less than 100 mV, nickel and cobalt contained in the sulfide can be selectively leached, while copper can remain in the form of copper sulfide.

In other words, by performing the leaching treatment under the above-described conditions, a leachate in which nickel and cobalt are selectively leached and a leach residue (solid residue) containing copper sulfide are generated.

The acid solution is not particularly limited, and for example, a hydrochloric acid solution, a sulfuric acid solution, a nitric acid solution, or the like can be used. Among them, a hydrochloric acid solution or a sulfuric acid solution is preferably used.

Generally, when the leaching treatment is performed with respect to a sulfide containing copper, nickel and cobalt using an acid solution (e.g., a hydrochloric acid solution), the following reactions (1) to (5) occur.

NiS + 2HCl → NiCl₂ + H₂S ··· (1)

CoS + 2HCl → CoCl₂ + H₂S ··· (2)

Ni + 2HCl → NiCl₂ + H₂ ··· (3)

Co + 2HCl → CoCl₂ + H₂ ··· (4)

CuS + 2HCl → CuCl₂ + H₂S ··· (5)

The present inventors have found that the reaction of the above reaction formula (5) can be significantly suppressed by setting the oxidation-reduction potential of the acidic solution containing the sulfide to be leached to a specific range in the leaching treatment, specifically, to less than 100 mV.

The condition of the redox potential (ORP) (silver/silver chloride electrode is referenced) in the leaching treatment is set to less than 100 mV as described above. Further, more preferably, the redox potential is set to less than -50 mV. In the leaching treatment, more preferably, by setting the redox potential of the solution to a condition of less than -50 mV, the reaction of the above formula (5) can be more effectively suppressed, and the copper concentration contained in the obtained leachate can be reduced to less than 0.1 g/L. Thus, copper can be more efficiently fixed in the leach residue and separability of copper from nickel and cobalt can be further improved.

There is no particular limitation on the method of controlling the redox potential. For example, when the redox potential is increased, the redox potential can be controlled by temporarily increasing the addition amount of the sulfide to be leached or adding an oxidant, for example, by blowing air.

The addition concentration of acid solution is required to be added so as to be 1 equivalent or more, preferably 1.5 equivalents or more, and more preferably 2 equivalents or more, with respect to nickel and cobalt contained in the sulfide to be treated. Further, the lower limit value of addition concentration of acid solution is preferably 3.0 equivalents or less, and more preferably 2.5 equivalents or less. Note that, when the addition concentration of acid solution exceeds 3.0 equivalents, a large amount of neutralization agent is required in a step after the leaching treatment, resulting in a decrease in economic efficiency.

The concentration of slurry generated by adding an acid solution to the sulfide is, for example, preferably 20 g/L or more, and more preferably 30 g/L or more.

The temperature of acid solution, i.e., the reaction temperature of leaching treatment, is preferably set to 60°C or more and less 100°C, and more preferably to 75°C or more and 98°C or less. In particular, considering the reaction rate, it is preferable to set the temperature to about 95°C.

With respect to the treatment time of leaching treatment, it is preferable to appropriately set the treatment time depending on the addition concentration of acid solution, but it is preferable to set the treatment time, for example, to 2 hours or more and 6 hours or less, and more preferably to 4 hours or more and 6 hours or less. Although depending on the addition concentration of acid solution, if the treatment time is too short, the leaching ratio of nickel and cobalt is not increased, and there is a possibility that separation from copper becomes insufficient. On the other hand, although longer treatment time improves the leaching ratio of nickel and cobalt, the leaching ratio of copper in the sulfide is also gradually increased, and there is possibility that copper is contained in the leachate.

In the leaching treatment, an acid solution is added to a sulfide to be treated (e.g., a nickel matte or the like), and then the sulfide and the acid solution are stirred under the condition in which the redox potential is less than 100 mV. A method of stirring is not particularly limited, and may be performed using, for example, a stirring device provided with a stirring blade or the like. By carrying out leaching while stirring in this manner, the leaching ratio of nickel and cobalt can be increased.

Note that, in the leaching treatment, the redox potential of solution is constantly monitored and a time point at which the redox potential is confirmed to exceed 100 mV or more and it becomes impossible to maintain the redox potential to less than 100 mV is determined as a time point at which the reaction is terminated. Then, the reaction is suppressed by cooling and a solid-liquid separation treatment is conducted to separate a leachate containing nickel and cobalt and a leach residue containing copper sulfide. Note that the solid-liquid separation process can be performed by a known method.

### EXAMPLES

Hereinafter, the present invention is described more specifically by illustrating the Examples of the present invention, but the present invention is not limited to the following Examples in any event.

### [Example 1]

Nickel matte, which is a sulfide containing copper, nickel and cobalt, was pulverized using a planetary ball mill, and three types of nickel matte samples having different particle sizes (un-pulverized sample, pulverized sample (A), and pulverized sample (B)) were prepared. Then, 6 g of each nickel matte sample was collected and 20.4 ml of a 11.64 N hydrochloric acid solution, which corresponds to 2 equivalents of nickel and cobalt in the nickel matte, was diluted to 300 ml with purified water. The liquid temperature of the solution was increased to 95°C, and then each of the nickel matte samples was added and stirred for 1 hour to 6 hours.

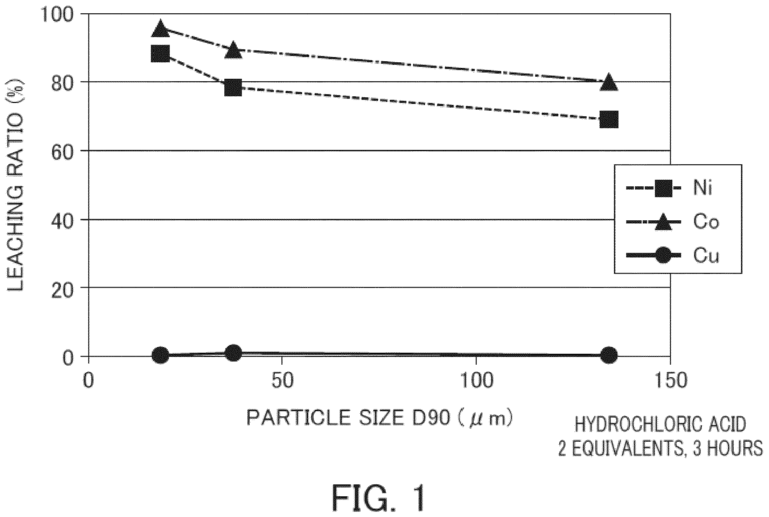

After stirring for a certain time period, filtration was performed for solid-liquid separation, and the content of each component in the leachate was determined by analyzing the obtained filtrate by an ICP-analyzer. Table 1 below shows the analytical values of the nickel matte, Table 2 below shows measured particle size distribution values of the nickel matte samples, and Tables 3 and 4 below show leaching conditions and results thereof. The redox potential (ORP) during the leaching treatment was relative to a silver/silver chloride electrode as a reference electrode. Note that the particle size distributions of the nickel matte samples were measured using a measuring device manufactured by Microtrac. FIG. 1 is a graph showing the relationship between the particle diameter (D90) of the nickel matte and the leaching ratio. Here, the leaching ratio refers to a percentage value represented by an amount of target component (metal) (g) in a leachate/an amount of target component (metal) (g) in nickel matte.

**[Table 1]**

| | Nickel matte analysis value [%] | | | | | | | | | |
|---|---|---|---|---|---|---|---|---|---|---|
| | Ni | Co | Cu | Fe | s | Si | Mg | Al | B | Na |
| Nickel matte | 57 | 0.84 | 13 | 6 | 23 | 0.03 | 0.01 | <0.01 | <0.01 | <0.01 |

**[Table 2]**

| Nickel matte | Particle size [µm] | | |
|---|---|---|---|
| | D10 | D50 | D90 |
| Un-pulverized sample | 5.8 | 49.4 | 134 |
| Pulverized sample (A) | 1.5 | 12.4 | 37.6 |
| Pulverized sample (B) | 1.5 | 6.9 | 18.5 |

**[Table 3]**

| Nickel matte | HCl equivalent | Time [h] | Filtrate [ml] | ORP [mV] | Residue [g] | ICP filtration analysis[g/L] | | | | |
|---|---|---|---|---|---|---|---|---|---|---|
| | | | | | | Ni | Co | Cu | Fe | S |
| Un-pulverized sample | 2 | 1 | 275 | - | 3.65 | 5.64 | 0.12 | 0.0 | 1.10 | 0.01 |
| | | 3 | 48 | - | - | 8.18 | 0.14 | 0.001 | 1.06 | 0.016 |
| Pulverized sample (A) | 2 | 1 | 300 | -106 | - | 5.80 | 0.12 | 0.003 | 1.09 | 0.07 |
| | | 3 | 300 | -63 | - | 8.95 | 0.15 | 0.020 | 1.07 | 0.01 |
| | | 6 | 297 | -90 | 0.78 | 11.84 | 0.17 | 0.0 | 1.17 | 0.01 |
| Pulverized sample (B) | 2 | 1 | 300 | -179 | - | 6.09 | 0.13 | 0.003 | 1.16 | 0.1 |
| | | 3 | 270 | -180 | - | 10.06 | 0.16 | 0.002 | 1.15 | 0.1 |
| | | 4.5 | 270 | 200 | - | 11.85 | 0.17 | 0.187 | 1.17 | 0.014 |
| | | 6 | 270 | 367 | 0.76 | 12.95 | 0.19 | 1.1 | 1.28 | 0.01 |

**[Table 4]**

| Nickel matte | HCl equivalent | Time [h] | Filtrate [ml] | ORP [mV] | Residue [g] | Residue grade[%] | | | | | Leachate[%] | | | | |
|---|---|---|---|---|---|---|---|---|---|---|---|---|---|---|---|
| | | | | | | Ni | Co | Cu | Fe | S | Ni | Co | Cu | Fe | S |
| Un-pulverized sample | 2 | 1 | 275 | - | 3.65 | 51 | 0.46 | 21 | 1.1 | 25 | 45 | 65 | 0.0 | 84 | 0.1 |
| | | 3 | 48 | - | - | - | - | - | - | - | 69 | 80 | 0.0 | 85 | 0.3 |
| Pulverized sample (A) | 2 | 1 | 300 | -106 | - | - | - | - | - | - | 51 | 71 | 0.1 | 91 | 1.5 |
| | | 3 | 300 | -63 | - | - | - | - | - | - | 79 | 89 | 0.8 | 89 | 0.2 |
| | | 6 | 297 | -90 | 0.78 | 4.8 | 0.02 | 69 | 0.06 | 20 | 99 | 96 | 0.0 | 93 | 0.1 |
| Pulverized sample (B) | 2 | 1 | 300 | -179 | - | - | - | - | - | - | 53 | 77 | 0.1 | 97 | 2.2 |
| | | 3 | 270 | -180 | - | - | - | - | - | - | 88 | 95 | 0.1 | 96 | 2.2 |
| | | 4.5 | 270 | 200 | - | - | - | - | - | - | 100 | 100 | 7.2 | 98 | 0.3 |
| | | 6 | 270 | 367 | 0.76 | 2.7 | 0.02 | 64 | 0.04 | 29 | 100 | 100 | 38.1 | 96 | 0.1 |

From Tables 3 and 4 and FIG. 1, as a result of the leaching treatment for 3 hours, it can be seen that as the particle size of the nickel matte is smaller by pulverization, the leaching ratio of nickel or cobalt is more improved. For example, the leaching ratio was 85% or more in pulverized sample (B). It could be confirmed that, at that time, the leaching ratio of copper could be suppressed to less than 1%. Therefore, it was found that the selective leaching of nickel and cobalt was possible.

However, it was found in the test of pulverized sample (B) that when the reaction was continued over 3 hours as leaching treatment time, the leaching ratio of copper increased. This is considered to be attributable to the fact that the redox potential gradually increased with the progress of the reaction.

### [Example 2]

Next, 6 g of nickel matte of pulverized sample (A) shown in Table 2 was collected and used. Hydrochloric acid corresponding to 1.5 equivalents to 2.2 equivalents of nickel and cobalt in the nickel matte was diluted to 300 ml with purified water, the temperature of the solution was increased to 95°C, and then the nickel matte sample was added and stirred for 0.5 hours to 6 hours.

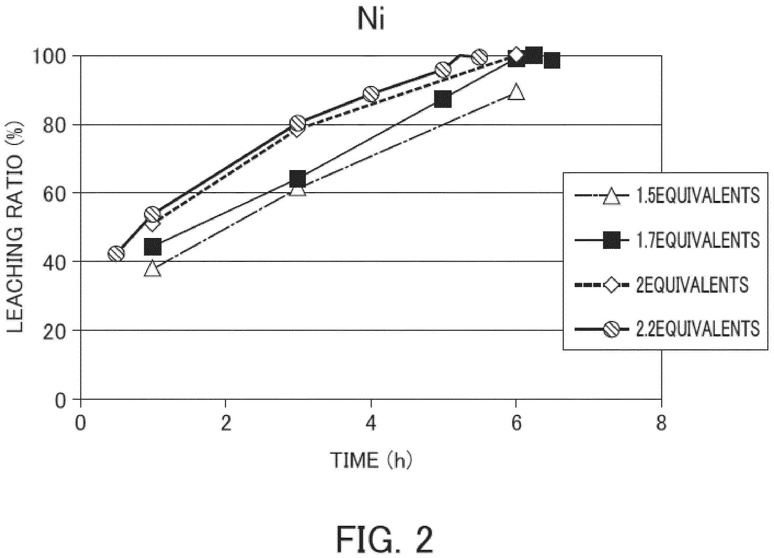

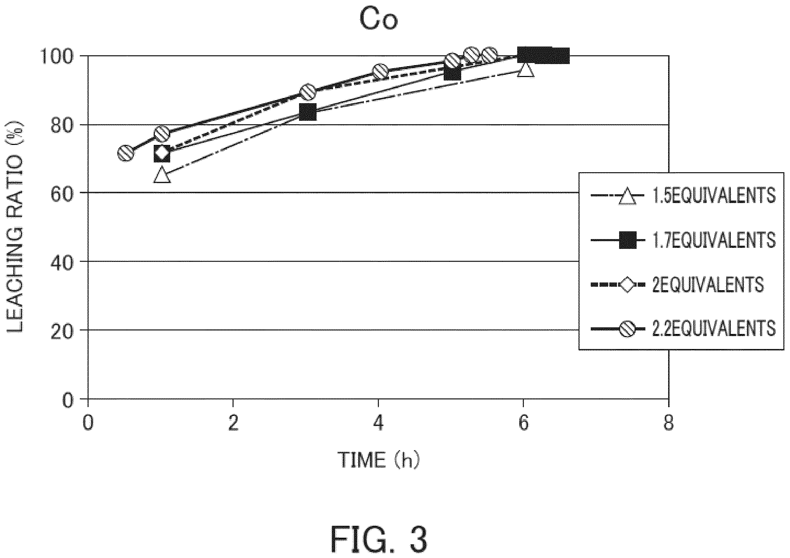

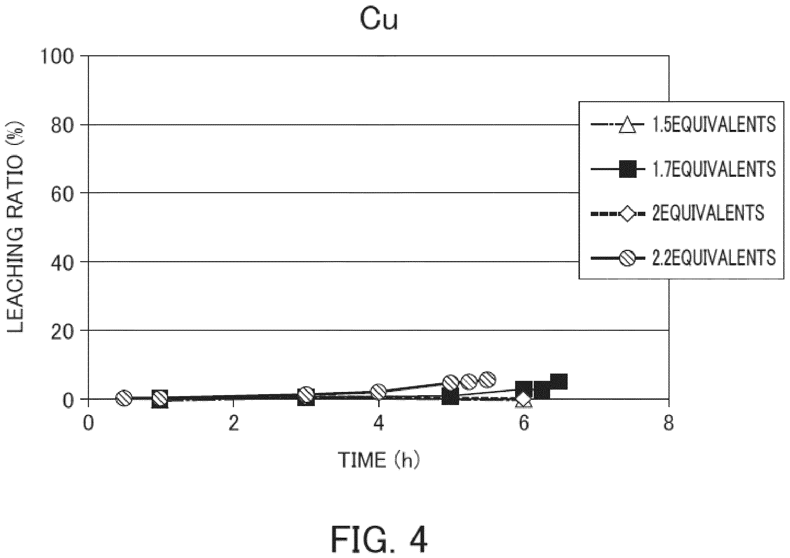

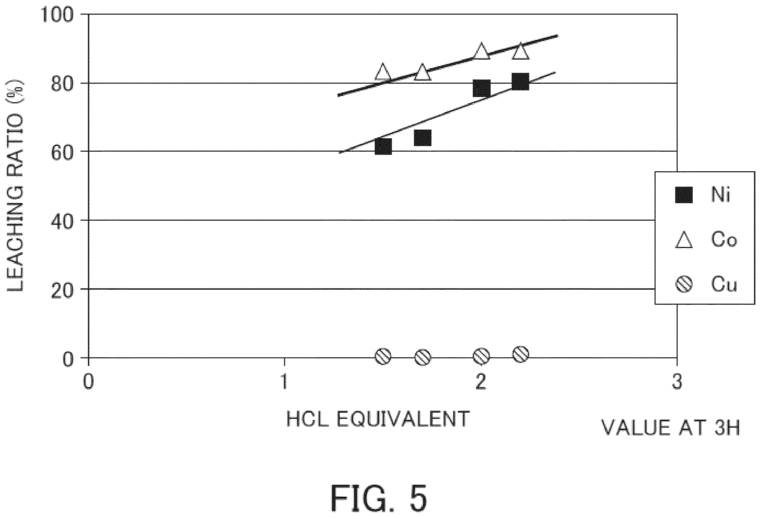

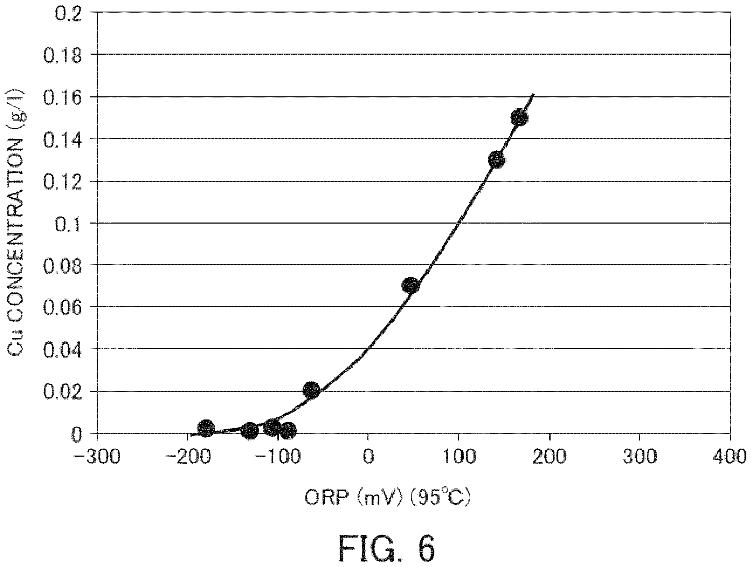

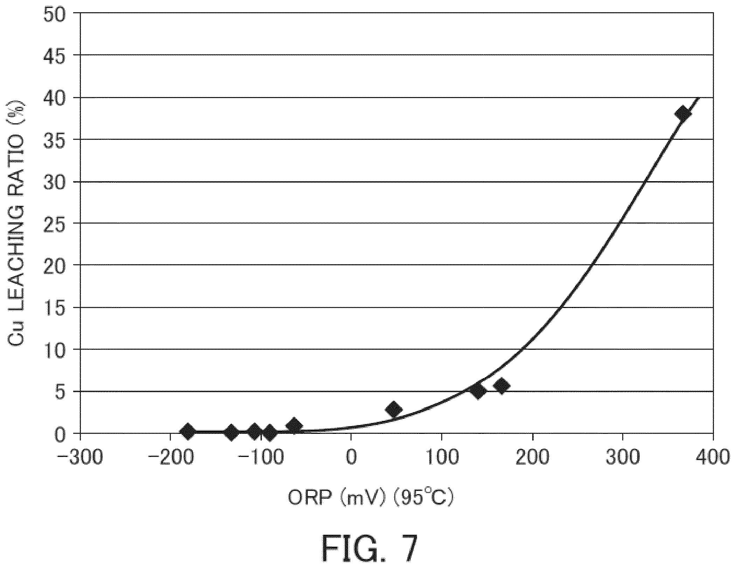

After stirring for a certain time period, filtration was performed for solid-liquid separation, and the content of each component in the leachate was determined by analyzing the obtained filtrate by an ICP-analyzer. The leaching conditions and the results are shown in Table 5 and Table 6 below. Further, FIGS. 2, 3 and 4 are graphs showing the relationship between the leaching treatment time and the leaching ratio of each component (FIG. 2: Ni, FIG. 3: Co, FIG. 4: Cu) with respect to each of the hydrochloric acid equivalents. In addition, FIG. 5 is a graph showing the relationship between the hydrochloric acid equivalent and the leaching ratio of each component in the leaching treatment time of 3 hours. FIG.6 is a graph showing the relationship between the redox potential (ORP, silver/silver chloride electrode was referenced) and the copper concentration in the leachate, during the leaching treatment. FIG.7 is a graph showing the relationship between the ORP and the copper leaching ratio (the data of Example 1 was also used).

**[Table 5]**

| Nickel matte | HCl equivalent | Time [h] | Filtrate [ml] | ORP [mV] | Residue [g] | ICP filtration analysis[g/L] | | | | |
|---|---|---|---|---|---|---|---|---|---|---|
| | | | | | | Ni | Co | Cu | Fe | S |
| | 2 | 1 | 300 | -106 | - | 5.80 | 0.12 | 0.003 | 1.09 | 0.07 |
| | | 3 | 300 | -83 | - | 8.95 | 0.15 | 0.02 | 1.07 | 0.01 |
| | | 6 | 297 | -90 | 0.78 | 11.84 | 0.17 | 0.0 | 1.17 | 0.01 |
| | 1.5 | 1 | 300 | -190 | - | 4.35 | 0.11 | 0.002 | 1.06 | 0.12 |
| | | 3 | 300 | - | - | 7.00 | 0.14 | 0.02 | 1.10 | 0.02 |
| | | 6 | 285 | -132 | 1.52 | 10.91 | 0.17 | 0.0 | 1.20 | 0.01 |
| | 1.7 | 1 | 300 | -199 | - | 5.05 | 0.12 | 0.009 | 1.05 | 0.013 |
| | | 3 | 300 | -188 | - | 7.31 | 0.14 | 0.014 | 1.03 | 0.011 |
| Pulverized sample (A) | | 5 | 300 | -100 | - | 9.94 | 0.16 | 0.028 | 1.08 | 0.012 |
| | | 6 | 300 | 20 | - | 11.32 | 0.17 | 0.081 | 1.13 | 0.009 |
| | | 6.25 | 300 | 47 | - | 11.61 | 0.17 | 0.07 | 1.16 | 0.019 |
| | | 6.5 | 296 | 141 | 1.03 | 11.34 | 0.17 | 0.13 | 1.12 | 0.01 |
| | 2.2 | 0.5 | 300 | -201 | | 4.82 | 0.12 | 0.01 | 1.04 | 0.019 |
| | | 1 | 300 | -167 | - | 6.15 | 0.13 | 0.012 | 1.10 | 0.015 |
| | | 3 | 300 | - | - | 9.16 | 0.15 | 0.038 | 1.10 | 0.014 |
| | | 4 | 300 | - | - | 10.14 | 0.16 | 0.059 | 1.08 | 0.014 |
| | | 5 | 300 | - | - | 10.94 | 0.17 | 0.126 | 1.08 | 0.01 |
| | | 5.25 | 300 | 55 | - | 11.45 | 0.17 | 0.133 | 1.13 | 0.014 |
| | | 5.5 | 289 | 166 | 0.97 | 12.21 | 0.18 | 0.15 | 1.19 | 0.01 |

**[Table 6]**

| Nickel matte | HCl equivalent | Time [h] | Filtrate [ml ] | ORP [mV] | Residue [g] | Residue grade [%] | | | | | Leachate [%] | | | | |
|---|---|---|---|---|---|---|---|---|---|---|---|---|---|---|---|
| | | | | | | Ni | Co | Cu | Fe | S | Ni | Co | Cu | Fe | S |
| | 2 | 1 | 300 | -106 | - | - | - | - | - | - | 51 | 71 | 0.1 | 91 | 1.5 |
| | | 3 | 300 | -83 | - | - | - | - | - | - | 79 | 89 | 0.8 | 89 | 0.2 |
| | | 6 | 297 | -90 | 0.78 | 4.8 | 0.02 | 69 | 0.06 | 20 | 100 | 100 | 0 | 97 | 0.1 |
| | 1.5 | 1 | 300 | -190 | - | - | - | - | - | - | 38 | 65 | 0.1 | 88 | 2.6 |
| | | 3 | 300 | - | - | - | - | - | - | - | 61 | 83 | 0.8 | 92 | 0.4 |
| | | 6 | 285 | -132 | 1.52 | 24 | 0.12 | 50 | 0.19 | 22 | 91 | 96 | 0 | 95 | 0.1 |
| | 1.7 | 1 | 300 | -199 | | - | - | - | - | - | 44 | 71 | 0.3 | 88 | 0.3 |
| | | 3 | 300 | -188 | | - | - | - | - | - | | 83 | 0.5 | 86 | 0.2 |
| Pulverized sample (A) | | 5 | 300 | -100 | | - | - | - | - | - | 87 | 95 | 1.1 | 90 | 0.3 |
| | | | 300 | 20 | | - | - | - | - | - | 99 | 100 | 3.1 | 94 | 0.2 |
| | | 6.25 | 300 | 47 | | - | - | - | - | - | 100 | 100 | 2.7 | 97 | 0.4 |
| | | 6.5 | 296 | 141 | 1.03 | 4.3 | 0.03 | 70 | 0.04 | 22 | 98 | 100 | 4.9 | 92 | 0.1 |
| | 2.2 | 0.5 | 300 | -201 | - | - | - | - | - | - | 42 | 71 | 0.4 | 87 | 0.4 |
| | | 1 | 300 | -167 | - | - | - | - | - | - | 54 | 71 | 0.5 | 92 | 0.3 |
| | | 3 | 300 | - | - | - | - | - | - | - | 80 | 89 | 1.5 | 92 | 0.3 |
| | | 4 | 300 | - | - | - | | - | - | - | 89 | 95 | 2.3 | 90 | 0.3 |
| | | 5 | 300 | - | - | - | - | - | - | - | 96 | 98 | 4.8 | 90 | 0.2 |
| | | 5.25 | 300 | 55 | - | - | - | - | - | - | 100 | 100 | 5.1 | 94 | 0.3 |
| | | 5.5 | 289 | 166 | 0.97 | 2.3 | 0.01 | 74 | 0.04 | 23 | 100 | 100 | 5.6 | 96 | 0.1 |

As shown in the Tables and the Figures, it can be seen that the higher the hydrochloric acid equivalent, the greater the reaction rate and the higher the leaching ratio of nickel and cobalt. In addition, it can be confirmed that although the leaching ratio of copper was as low as less than 6%, the leaching ratio of copper gradually increased as the hydrochloric acid equivalent was increased, and the leaching ratio of copper increased around when the leaching ratio of nickel and cobalt had exceeded about 90%.

In addition, it can be seen that when the ORP during the reaction was less than 100 mV, the copper concentration in the resulting leachate became very low, as low as 0.01 g/L or less. On the other hand, it can be confirmed that the copper level in the leachate during the reaction increased as the ORP increased. From this, it can be seen that, by controlling the ORP, specifically by performing the leaching treatment under the condition of ORP being less than 100 mV, leaching of copper could be significantly suppressed, and nickel and cobalt could be selectively leached, while copper could be left as a leach residue containing copper sulfide.

## Claims

1. A method for separating copper from nickel and cobalt, wherein a sulfide comprising copper, nickel and cobalt is pulverized so as to have a particle size of 150 µm or less as a D90 value, value at 90% in terms of volume determined from the particle size distribution measured by a particle size distribution measuring apparatus or the like using a laser diffraction scattering method and the pulverized sulfide is subjected to a leaching treatment by stirring the pulverized sulfide in an acid solution under a condition wherein a redox potential (reference electrode: silver/silver chloride electrode) is less than 100 mV.

2. The method for separating copper from nickel and cobalt according to claim 1, wherein the leaching treatment produces a leachate in which nickel and cobalt are leached, and a leach residue comprising copper sulfide.

3. The method for separating copper from nickel and cobalt according to claim 1 or claim 2, wherein the leaching treatment is performed at an acid solution temperature in a range of 60°C or more and less than 100°C.

4. The method for separating copper from nickel and cobalt according to any one of claims 1 to 3, wherein a hydrochloric acid solution or a sulfuric acid solution is used as the acid solution.

5. The method for separating copper from nickel and cobalt according to any one of claims 1 to 4, wherein the sulfide is nickel matte.

## Patentansprüche

1. Verfahren zum Trennen von Kupfer von Nickel und Kobalt, wobei ein Sulfid, das Kupfer, Nickel und Kobalt enthält, pulverisiert wird, so dass es eine Partikelgröße von 150 µm oder weniger als D90-Wert bei 90 % betreffend Volumen aufweist, bestimmt aus der Partikelgrößenverteilung, die mit einem Gerät zur Messung der Partikelgrößenverteilung oder dergleichen unter Verwendung eines Laserbeugungsstreuungsverfahrens gemessen wird, und das pulverisierte Sulfid einer Auslaugungsbehandlung unterzogen wird, indem das pulverisierte Sulfid in einer Säurelösung unter einer Bedingung gerührt wird, bei der ein Redoxpotential (Referenzelektrode: Silber/Silberchloridelektrode) weniger als 100 mV beträgt.

2. Verfahren zum Trennen von Kupfer von Nickel und Kobalt nach Anspruch 1, wobei die Auslaugungsbehandlung eine Laugelösung erzeugt, in der Nickel und Kobalt ausgelaugt sind, und einen Auslaugrückstand, der Kupfersulfid enthält.

3. Verfahren zum Trennen von Kupfer von Nickel und Kobalt nach Anspruch 1 oder Anspruch 2, wobei die Auslaugungsbehandlung bei einer Säurelösungstemperatur in einem Bereich von 60°C oder mehr und weniger als 100°C durchgeführt wird.

4. Verfahren zum Trennen von Kupfer von Nickel und Kobalt nach einem der Ansprüche 1 bis 3, wobei als Säurelösung eine Salzsäurelösung oder eine Schwefelsäurelösung verwendet wird.

5. Verfahren zum Trennen von Kupfer von Nickel und Kobalt nach einem der Ansprüche 1 bis 4, wobei das Sulfid Nickelmatte ist.

## Revendications

1. Procédé pour séparer du cuivre à partir de nickel et de cobalt, dans lequel un sulfure comprenant du cuivre, du nickel et du cobalt est pulvérisé de manière à avoir une taille de particule de 150 µm ou moins en tant que valeur D90, valeur à 90 % en termes de volume déterminée à partir de la distribution de taille de particule mesurée par un appareil de mesure de distribution de taille de particule ou analogue en utilisant un procédé de diffusion par diffraction laser, et le sulfure pulvérisé est soumis à un traitement de lixiviation par agitation du sulfure pulvérisé dans une solution acide dans une condition dans laquelle un potentiel d'oxydo-réduction (électrode de référence : électrode d'argent/de chlorure d'argent) est inférieur à 100 mV.

2. Procédé pour séparer du cuivre à partir de nickel et de cobalt selon la revendication 1, dans lequel le traitement de lixiviation produit un lixiviat dans lequel du nickel et du cobalt sont lixiviés, et un résidu de lixiviation comprenant du sulfure de cuivre.

3. Procédé pour séparer du cuivre à partir de nickel et de cobalt selon la revendication 1 ou la revendication 2, dans lequel le traitement de lixiviation est effectué à une température de solution acide dans une plage de 60°C ou plus et inférieure à 100°C.

4. Procédé pour séparer du cuivre à partir de nickel et de cobalt selon l'une quelconque des revendications 1 à 3, dans lequel une solution d'acide chlorhydrique ou une solution d'acide sulfurique est utilisée en tant que solution acide.

5. Procédé pour séparer du cuivre à partir de nickel et de cobalt selon l'une quelconque des revendications 1 à 4, dans lequel le sulfure est une matte de nickel.
